# EUROPÄISCHE PATENTANMELDUNG

(11) **EP 2 735 820 A1**
(43) Veröffentlichungstag der Anmeldung: **28.05.2014**
(21) Anmeldenummer: 12193565.4
(22) Anmeldetag: 21.11.2012
(51) Int. Cl.: F25B 15/02, C09K 5/04, F25B 30/04

(54) **Absorptionswärmepumpe und Sorptionsmittel für eine Absorptionswärmepumpe umfassend Methansulfonsäure**

(71) Anmelder: Evonik Industries AG, 45128 Essen (DE)
(72) Erfinder: Zehnacker, Olivier, 44263 Dortmund (DE); Schneider, Rolf, 63584 Gründau-Rothenbergen (DE); Schneider, Marc-Christoph, 64295 Darmstadt (DE); Seiler, Matthias, Dr., 64347 Griesheim (DE); Wang, Xinming, 242-0003 Kanagawa-ken (JP)

(57) **Zusammenfassung**

Die Erfindung betrifft die Verwendung von Methansulfonsäure als Sorptionsmittel in einer Absorptionswärmepumpe; ein Sorptionsmittel für eine Absorptionswärmepumpe, das Methansulfonsäure und eine ionische Flüssigkeit umfasst; sowie eine Absorptionswärmepumpe mit einem Absorber, einem Desorber, einem Kondensator, einem Verdampfer und einem Arbeitsmedium mit einem flüchtigen Kältemittel und einem Sorptionsmittel, wobei das Sorptionsmittel Methansulfonsäure umfasst.

## Beschreibung

Die Erfindung betrifft Absorptionswärmepumpen und Sorptionsmittel für Absorptionswärmepumpen, die Methansulfonsäure umfassen.

Klassische Wärmepumpen beruhen auf einem Kreislauf eines Kältemittels über einen Verdampfer und einen Kondensator. Im Verdampfer wird ein Kältemittel verdampft, wobei durch die vom Kältemittel aufgenommene Verdampfungswärme einem ersten Medium Wärme entzogen wird. Das verdampfte Kältemittel wird dann mit einem Kompressor auf einen höheren Druck gebracht und bei einer höheren Temperatur als bei der Verdampfung im Kondensator kondensiert, wobei die Verdampfungswärme wieder frei wird und auf einem höheren Temperaturniveau Wärme an ein zweites Medium abgegeben wird. Anschließend wird das verflüssigte Kältemittel wieder auf den Druck des Verdampfers entspannt.

Die klassischen Wärmepumpen haben den Nachteil, dass sie viel mechanische Energie für die Kompression des dampfförmigen Kältemittels verbrauchen. Absorptionswärmepumpen weisen demgegenüber einen verringerten Bedarf an mechanischer Energie auf. Absorptionswärmepumpen weisen zusätzlich zu dem Kältemittel, dem Verdampfer und dem Kondensator einer klassischen Wärmepumpe noch ein Sorptionsmittel, einen Absorber und einen Desorber auf. Im Absorber wird das verdampfte Kältemittel bei dem Druck der Verdampfung in dem Sorptionsmittel absorbiert und anschließend im Desorber bei dem höheren Druck der Kondensation durch Wärmezufuhr wieder aus dem Sorptionsmittel desorbiert. Die Verdichtung des flüssigen Arbeitsmediums aus Kältemittel und Sorptionsmittel erfordert weniger mechanische Energie als die Kompression des Kältemitteldampfs in einer klassischen Wärmepumpe, an Stelle des Verbrauchs an mechanischer Energie tritt die zur Desorption des Kältemittels eingesetzte Wärmeenergie. Der Wirkungsgrad einer Absorptionswärmepumpe wird berechnet als das Verhältnis des zum Kühlen bzw. Heizen genutzten Wärmestroms zu dem Wärmestrom, der dem Desorber für den Betrieb der Absorptionswärmepumpe zugeführt wird, und wird als "Coefficient of Performance", abgekürzt COP, bezeichnet.

Ein großer Teil der technisch eingesetzten Absorptionswärmepumpen verwendet ein Arbeitsmedium, das Wasser als Kältemittel und Lithiumbromid als Sorptionsmittel enthält. Dieses Arbeitsmedium hat jedoch den Nachteil, dass eine Wasserkonzentration von 35 bis 40 Gew.-% im Arbeitsmedium nicht unterschritten werden darf, da es sonst zur Kristallisation von Lithiumbromid und dadurch zu Störungen bis hin zu einer Verfestigung des Arbeitsmediums kommen kann.

In WO 2005/113702 und WO 2006/134015 wurde vorgeschlagen, zur Vermeidung von Störungen durch Kristallisation des Sorptionsmittels Arbeitsmedien einzusetzen, die eine ionische Flüssigkeit mit organischen Kationen als Sorptionsmittel enthält. Diese Arbeitsmedien haben den Nachteil, dass sie bei einem geringen Gehalt an Kältemittel eine unerwünscht hohe Viskosität aufweisen.

Arbeitsmedien, die Schwefelsäure als Sorptionsmittel enthalten, haben ebenfalls den Nachteil, dass sie bei einem geringen Gehalt an Kältemittel eine unerwünscht hohe Viskosität aufweisen. Darüber hinaus sind sie auch sehr korrosiv.

Es besteht deshalb weiterhin ein Bedarf nach Sorptionsmitteln für Absorptionswärmepumpen, mit denen sich ein guter Wirkungsgrad der Absorptionswärmepumpe erzielen lässt, ohne dass Probleme durch Kristallisation des Sorptionsmittels auftreten und mit denen das Arbeitsmedium gleichzeitig eine geringe Viskosität und eine beherrschbare Korrosivität aufweisen.

Es wurde nun gefunden, dass sich diese Kombination von Eigenschaften durch die Verwendung von Methansulfonsäure als Sorptionsmittel erreichen lässt, indesondere durch die Verwendung von Methansulfonsäure in Kombination mit einer ionischen Flüssigkeit.

Gegenstand der Erfindung ist dementsprechend eine Absorptionswärmepumpe, die einen Absorber, einen Desorber, einen Kondensator, einen Verdampfer und ein Arbeitsmedium umfasst, wobei das Arbeitsmedium ein flüchtiges Kältemittel und ein Sorptionsmittel umfasst und das Sorptionsmittel Methansulfonsäure umfasst.

Gegenstand der Erfindung ist außerdem ein Sorptionsmittel für eine Absorptionswärmepumpe, das Methansulfonsäure und eine ionische Flüssigkeit umfasst.

Ein weiterer Gegenstand der Erfindung ist die Verwendung von Methansulfonsäure als Sorptionsmittel in einer Absorptionswärmepumpe.

Der Begriff Absorptionswärmepumpe umfasst erfindungsgemäß alle Vorrichtungen, mit denen Wärme bei einem niedrigen Temperaturniveau aufgenommen und bei einem höheren Temperaturniveau wieder abgegeben wird und die durch Wärmezufuhr zum Desorber angetrieben werden. Die erfindungsgemäßen Absorptionswärmepumpen umfassen damit sowohl Absorptionskältemaschinen und Absorptionswärmepumpen im engeren Sinn, bei denen Absorber und Verdampfer bei einem geringeren Arbeitsdruck als Desorber und Kondensator betrieben werden, als auch Absorptionswärmetransformatoren, bei denen Absorber und Verdampfer bei einem höheren Arbeitsdruck als Desorber und Kondensator betrieben werden. In Absorptionskältemaschinen wird die Aufnahme von Verdampfungswärme im Verdampfer zur Kühlung eines Mediums genutzt. In Absorptionswärmepumpen im engeren Sinn wird die im Kondensator und/oder Absorber freigesetzte Wärme zum Heizen eines Mediums genutzt. In Absorptionswärmetransformatoren wird die im Absorber freigesetzte Absorptionswärme zum Heizen eines Mediums genutzt, wobei die Absorptionswärme auf einem höheren Temperaturniveau als bei der Zufuhr von Wärme zum Desorber erhalten wird.

Die erfindungsgemäße Absorptionswärmepumpe umfasst einen Absorber, einen Desorber, einen Kondensator, einen Verdampfer und ein Arbeitsmedium, das ein flüchtiges Kältemittel und ein Sorptionsmittel umfasst.

Im Betrieb der erfindungsgemäßen Absorptionswärmepumpe wird im Absorber dampfförmiges Kältemittel in kältemittelarmem Arbeitsmedium absorbiert unter Erhalt eines kältemittelreichen Arbeitsmediums und unter Freisetzung von Absorptionswärme. Aus dem so erhaltenen kältemittelreichen Arbeitsmedium wird im Desorber unter Wärmezufuhr Kältemittel dampfförmig desorbiert unter Erhalt von kältemittelarmem Arbeitsmedium, das in den Absorber zurückgeführt wird. Das im Desorber erhaltene dampfförmige Kältemittel wird im Kondensator unter Freisetzung von Kondensationswärme kondensiert, das erhaltene flüssige Kältemittel wird im Verdampfer unter Aufnahme von Verdampfungswärme verdampft und das dabei erhaltene dampfförmige Kältemittel wird in den Absorber zurückgeführt.

In einer bevorzugten Ausführungsform ist die Absorptionswärmepumpe eine Absorptionskältemaschine und im Verdampfer wird Wärme aus einem zu kühlenden Medium aufgenommen.

Das Arbeitsmedium der erfindungsgemäßen Absorptionswärmepumpe umfasst ein flüchtiges Kältemittel und ein Sorptionsmittel, das Methansulfonsäure umfasst. Als flüchtiges Kältemittel eignen sich Stoffe, die einen Siedepunkt im Bereich von -90 bis 120 °C aufweisen und die nicht irreversibel mit Methansulfonsäure reagieren. Vorzugsweise umfasst das Arbeitsmedium der erfindungsgemäßen Absorptionswärmepumpe Wasser als Kältemittel.

In einer bevorzugten Ausführungsform beträgt der kombinierte Anteil von Wasser und Methansulfonsäure am Absorptionsmedium mehr als 90 Gew.-%.

In einer weiteren bevorzugten Ausführungsform umfasst das Sorptionsmittel Methansulfonsäure und eine ionische Flüssigkeit. Vorzugsweise liegt das Gewichtsverhältnis von Methansulfonsäure zu ionischer Flüssigkeiten im Bereich von 9 : 1 bis 1 : 100. Mit einem hohen Gewichtsverhältnis von Methansulfonsäure zu ionischer Flüssigkeit, vorzugsweise im Bereich von 9 : 1 bis 1 : 4 und besonders bevorzugt im Bereich von 9 : 1 bis 1 : 1, lässt sich ein niedriger Dampfdruck des Kältemittels bei der im Absorber erforderlichen Temperatur und eine hohe Dampfdruckdifferenz zwischen den für Absorber und Desorber erforderlichen Temperaturen erreichen. Schon mit einem niedrigen Gewichtsverhältnis von Methansulfonsäure zu ionischer Flüssigkeit, vorzugsweise im Bereich von 1 : 1 bis 1 : 100, besonders bevorzugt 1 : 4 bis 1 : 100 und am meisten bevorzugt im Bereich von 1 : 10 bis 1 : 100, lässt sich gegenüber Arbeitsmedien, die nur ionische Flüssigkeit als Sorptionsmittel enthalten, eine deutlich geringere Viskosität und eine verbesserte thermische Stabilität des Arbeitsmediums erzielen. Für ein Gewichtsverhältnis von Methansulfonsäure zu ionischer Flüssigkeit im Bereich von 9 : 1 bis 1 : 10, vorzugsweise 1 : 1 bis 1 : 10 und besonders bevorzugt 1 : 1 bis 1 : 4 wird außerdem für Arbeitsmedien, die Wasser als Kältemittel enthalten, überraschenderweise ein nichtideales Verhalten des Dampfdrucks mit erhöhtem Dampfdruck bei der im Desorber erforderlichen Temperatur erzielt.

Der Begriff ionische Flüssigkeit bezeichnet dabei ein Salz oder eine Mischung von Salzen aus Anionen und Kationen, wobei das Salz bzw. die Mischung von Salzen einen Schmelzpunkt von weniger als 100°C aufweist. Der Begriff ionische Flüssigkeit bezieht sich dabei auf Salze oder Mischungen von Salzen frei von nichtionischen Stoffen oder Additiven. Vorzugsweise besteht die ionische Flüssigkeit aus einem oder mehreren Salzen von organischen Kationen mit organischen oder anorganischen Anionen. Die ionische Flüssigkeit weist vorzugsweise einen Schmelzpunkt von weniger als 20°C auf, um bei der Verwendung des Arbeitsmediums in einer Absorptionswärmepumpe eine Verfestigung der ionische Flüssigkeit im Sorptionsmittelkreislauf zu vermeiden.

Für das erfindungsgemäße Sorptionsmittel eignen sich ionische Flüssigkeiten mit Anionen starker Säuren, vorzugsweise von Säuren mit einem pKa von weniger als 0. Geeignete Anionen sind Nitrat, Perchlorat, Hydrogensulfat, Anionen der Formeln R^{a}OSO₃ und R^{a}SO₃⁻, wobei R^{a} ein linearer oder verzweigter aliphatischer Kohlenwasserstoffrest mit 1 bis 30 Kohlenstoffatomen, ein cycloaliphatischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein linearer oder verzweigter Perfluoralkylrest mit 1 bis 30 Kohlenstoffatomen ist, sowie Anionen der Formeln R^{a}OSO₃⁻ und R^{a}SO₃⁻, in denen R^{a} ein Polyetherrest ist. Bevorzugt ist das Anion Nitrat, Hydrogensulfat, Methansulfonat, Methylsulfat oder Ethylsulfat, besonders bevorzugt Methansulfonat.

Das oder die organischen Kationen der ionischen Flüssigkeit können einfach, zweifach oder mehrfach positiv geladen sein und sind vorzugsweise einfach positiv geladen. Bevorzugt weisen das oder die organischen Kationen der ionischen Flüssigkeit ein Molekulargewicht von höchstens 260 g/mol auf, besonders bevorzugt von höchstens 220 g/mol, insbesondere von höchstens 195 g/mol und am meisten bevorzugt von höchstens 170 g/mol. Die Beschränkung der molaren Masse des Kations verbessert die Ausgasungsbreite des Arbeitsmediums bei dem Betrieb einer Absorptionswärmepumpe.

Als organische Kationen eignen sich insbesondere Kationen der allgemeinen Formeln (I) bis (V):

R¹R²R³R⁴N⁺ (I)

R¹R²R³R⁴P⁺ (I)

R¹R²R³S⁺ (III)

R¹R²N⁺=C (NR³R⁴) (NR⁵R⁶) (IV)

R¹R²N⁺=C (NR³R⁴) (XR⁵) (V)

in denen
R¹, R², R³, R⁴, R⁵, R⁶ gleich oder unterschiedlich sind und Wasserstoff, einen linearen oder verzweigten aliphatischen Kohlenwasserstoffrest, einen cycloaliphatischen Kohlenwasserstoffrest, einen aromatischen Kohlenwasserstoffrest, einen Alkylarylrest oder einen Polyetherrest der Formel -(R⁷-O) ₙ-R⁸ bedeuten, wobei für Kationen der Formel (V) R⁵ nicht Wasserstoff ist,
R⁷ ein 2 oder 3 Kohlenstoffatome enthaltender linearer oder verzweigter Alkylenrest ist,
n von 1 bis 3 ist,
R⁸ ein linearer oder verzweigter aliphatischer Kohlenwasserstoffrest ist,
X ein Sauerstoffatom oder ein Schwefelatom ist, und wobei mindestens einer und vorzugsweise jeder der Reste R¹, R², R³, R⁴, R⁵ und R⁶ von Wasserstoff verschieden ist.

Ebenso geeignet sind Kationen der Formeln (I) bis (V), in denen die Reste R¹ und R³ zusammen einen 4- bis 10-gliedrigen, vorzugsweise 5- bis 6-gliedrigen, Ring bilden.

Ebenfalls geeignet sind heteroaromatische Kationen mit mindestens einem quaternären Stickstoffatom im Ring, das einen wie oben definierten Rest R¹ trägt, vorzugsweise am Stickstoffatom substituierte Derivate von Pyrrol, Pyrazol, Imidazol, Oxazol, Isoxazol, Thiazol, Isothiazol, Pyridin, Pyrimidin, Pyrazin, Indol, Chinolin, Isochinolin, Cinnolin, Chinoxalin oder Phthalazin.

Vorzugsweise enthält das organische Kation ein quaternäres Stickstoffatom. Das organische Kation ist vorzugsweise ein 1-Alkylimidazoliumion, 1,3-Dialkylimidazoliumion, 1,3-Dialkylimidazoliniumion, N-Alkylpyridiniumion, N,N-Dialkylpyrrolidiniumion oder ein Ammoniumion der Struktur R¹R²R³R⁴N⁺, wobei R¹, R² und R³ unabhängig voneinander Wasserstoff oder Alkyl sind und R⁴ ein Alkylrest ist.

In einer bevorzugten Ausführungsform ist das organische Kation ein 1,3-Dialkylimidazoliumion, wobei die Alkylgruppen vorzugsweise unabhängig voneinander ausgewählt sind aus Methyl, Ethyl, n-Propyl und n-Butyl.

Bevorzugte ionische Flüssigkeiten sind 1,3-Dimethylimidazoliummethansulfonat, 1-Ethyl-3-methylimidazoliummethansulfonat, 1,3-Diethylimidazoliummethansulfonat, 1,3-Dimethylimidazoliummethylsulfat, 1-Ethyl-3-methylimidazoliummethylsulfat, 1-Ethyl-3-methylimidazoliumethylsulfat und 1,3-Diethylimidazoliumethylsulfat. Besonders bevorzugt sind 1,3-Dimethylimidazoliummethansulfonat, 1-Ethyl-3-methylimidazoliummethansulfonat und 1,3-Diethylimidazoliummethansulfonat, insbesondere 1,3-Dimethylimidazoliummethansulfonat.

Die ionischen Flüssigkeiten können nach aus dem Stand der Technik bekannten Verfahren hergestellt werden, beispielsweise wie in P. Wasserscheid, T. Welton, Ionic Liquids in Synthesis, 2nd edition, Wiley-VCH (2007), ISBN 3-527-31239-0 oder in Angew. Chemie 112 (2000) Seiten 3926-3945 beschrieben.

Die ionische Flüssigkeiten ist vorzugsweise bei 20 °C flüssig und weist bei dieser Temperatur eine Viskosität gemäß DIN 53 019 von 1 bis 15.000 mPas, besonders bevorzugt von 2 bis 10.000 mPa˙s, insbesondere 5 bis 5.000 mPa˙s und am meisten bevorzugt von 10 bis 3.000 mPa˙s auf. Bei einer Temperatur von 50 °C weist die ionische Flüssigkeit vorzugsweise eine Viskosität von weniger als 3.000 mPa˙s, besonders bevorzugt von weniger als 2.000 mPa˙s und insbesondere von weniger als 1.000 mPa˙s auf.

Vorzugsweise werden ionische Flüssigkeiten verwendet, die mit Wasser unbegrenzt mischbar, hydrolysestabil und bis zu einer Temperatur von 100°C thermisch stabil sind.

Hydrolysestabile ionische Flüssigkeiten zeigen in einer Mischung mit 50 Gew.-% Wasser bei einer Lagerung bei 80°C innerhalb von 8000 h weniger als 5 % Abbau durch Hydrolyse.

Bis zu einer Temperatur von 100°C thermisch stabile ionische Flüssigkeiten zeigen in einer thermogravimetrischen Analyse unter Stickstoffatmosphäre beim Aufheizen von 25 °C auf 100 °C mit einer Heizrate von 10 °C/min eine Gewichtsabnahme von weniger als 20 %. Besonders bevorzugt sind ionische Flüssigkeiten, die bei der Analyse eine Gewichtsabnahme von weniger als 10 % und insbesondere weniger als 5 % zeigen.

Die Verwendung von Methansulfonsäure als Sorptionsmittel in einer Absorptionswärmepumpe vermeidet das Problem der Sorptionsmittelkristallisation, das mit dem Sorptionsmittel Lithiumbromid auftritt. Gegenüber Schwefelsäure als Sorptionsmittel hat Methansulfonsäure den Vorteil einer geringeren Korrosivität des Absorptionsmediums. Gegenüber reinen ionischen Flüssigkeiten hat Methansulfonsäure den Vorteil einer geringen Viskosität und einer hohen Absorptionskapazität für Wasser.

Mit den erfindungsgemäßen Sorptionsmitteln, die Methansulfonsäure in Kombination mit einer ionischen Flüssigkeit umfassen, lässt sich eine besonders gute Kombination von geringer Korrosivität, geringer Viskosität, hoher thermischer Stabilität des Sorptionsmittels und hoher Absorptionskapazität für Wasser erreichen.

Die nachfolgenden Beispiele verdeutlichen die Erfindung, ohne jedoch den Gegenstand der Erfindung zu beschränken.

### Beispiele:

### Beispiele 1 bis 5

Für Arbeitsmedien, die 15 Gew.-% Wasser als Kältemittel und 85 Gew.-% eines Sorptionsmittels aus Methansulfonsäure (MeSO₃H) und 1,3-Dimethylimidazoliummethansulfonat (MMIM MeSO₃) enthielten, wurde der Dampfdruck bei 35 °C und 80 °C bestimmt. Die untersuchten Gewichtsanteile an Methansulfonsäure und 1,3-Dimethylimidazoliummethansulfonat und die erhaltenen Ergebnisse sind in Tabelle 1 zusammengestellt.

**Tabelle 1**

| Dampfdruck von Arbeitsmedien aus 15 Gew.-% Wasser und 85 Gew.-% Sorptionsmittel | | | |
|---|---|---|---|
| Beispiel | Gewichtsanteile im Sorptionsmittel | Dampfdruck bei 35 °C in mbar | Dampfdruck bei 80 °C in mbar |
| 1 | 100 % MeSO₃H | 1,3 | 10, 5 |
| 2 | 58 % MeSO₃H + 42 % MMIM MeSO₃ | 6, 8 | 100 |
| 3 | 50 % MeSO₃H + 50 % MMIM MeSO₃ | 9,2 | 115 |
| 4 | 20 % MeSO₃H + 80 % MMIM MeSO₃ | 12,1 | 136 |
| 5 | *100 % MMIM MeSO₃ | 12, 8 | 129 |

| | | | |
|---|---|---|---|
| * nicht erfindungsgemäß | | | |

## Patentansprüche

1. Absorptionswärmepumpe, umfassend einen Absorber, einen Desorber, einen Kondensator, einen Verdampfer und ein Arbeitsmedium umfassend ein flüchtiges Kältemittel und ein Sorptionsmittel,
**dadurch gekennzeichnet,**
**dass** das Sorptionsmittel Methansulfonsäure umfasst.

2. Absorptionswärmepumpe nach Anspruch 1,
**dadurch gekennzeichnet,**
**dass** sie eine Absorptionskältemaschine ist und im Verdampfer Wärme aus einem zu kühlenden Medium aufnimmt.

3. Absorptionswärmepumpe nach Anspruch 1 oder 2,
**dadurch gekennzeichnet,**
**dass** sie Wasser als Kältemittel umfasst.

4. Sorptionsmittel für eine Absorptionswärmepumpe,
**dadurch gekennzeichnet,**
**dass** es Methansulfonsäure und eine ionische Flüssigkeit umfasst.

5. Sorptionsmittel nach Anspruch 4,
**dadurch gekennzeichnet,**
**dass** das Gewichtsverhältnis von Methansulfonsäure zu ionischer Flüssigkeiten im Bereich von 9 : 1 bis 1 : 4 liegt.

6. Sorptionsmittel nach Anspruch 4,
**dadurch gekennzeichnet,**
**dass** das Gewichtsverhältnis von Methansulfonsäure zu ionischer Flüssigkeiten im Bereich von 1 : 4 bis 1 : 100 liegt.

7. Sorptionsmittel nach einem der Ansprüche 4 bis 6,
**dadurch gekennzeichnet,**
**dass** es ein 1,3-Dialkylimidazoliumsalz als ionische Flüssigkeit umfasst.

8. Sorptionsmittel nach Anspruch 7,
**dadurch gekennzeichnet,**
**dass** das 1,3-Dialkylimidazoliumsalz ausgewählt ist aus 1,3-Dimethylimidazoliummethansulfonat, 1-Ethyl-3-methylimidazoliummethansulfonat und 1,3-Diethylimidazoliummethansulfonat.

9. Absorptionswärmepumpe nach einem der Anspruch 1 bis 3,
**dadurch gekennzeichnet,**
**dass** sie ein Sorptionsmittel gemäß einem der Ansprüche 4 bis 8 umfasst.

10. Verwendung von Methansulfonsäure als Sorptionsmittel in einer Absorptionswärmepumpe.

11. Verwendung nach Anspruch 10,
**dadurch gekennzeichnet,**
**dass** die Absorptionswärmepumpe eine Absorptionskältemaschine ist und im Verdampfer Wärme aus einem zu kühlenden Medium aufgenommen wird.

12. Verwendung nach Anspruch 10 oder 11,
**dadurch gekennzeichnet,**
**dass** Methansulfonsäure in Form eines Sorptionsmittels gemäß einem der Ansprüche 4 bis 8 verwendet wird.
